# EUROPEAN PATENT APPLICATION

(11) **EP 4 814 543 A1**
(43) Date of publication of application: **30.09.2026**
(21) Application number: 24899958.3
(22) Date of filing: 06.12.2024
(51) Int. Cl.: G01S 19/03

(54) **COMMUNICATION METHOD AND COMMUNICATION APPARATUS**

(30) Priority: 08.12.2023 CN 202311693028
(71) Applicant: Huawei Technologies Co., Ltd., Shenzhen, Guangdong 518129 (CN)
(72) Inventor: LIU, Mengting, Shenzhen, Guangdong 518129 (CN); SUN, Chao, Shenzhen, Guangdong 518129 (CN); LI, Bingzhao, Shenzhen, Guangdong 518129 (CN); XIE, Xi, Shenzhen, Guangdong 518129 (CN)
(74) Representative: Goddar, Heinz J.
(86) International application number: PCT/CN2024/137392
(87) International publication number: WO 2025/119325

(57) **Abstract**

A communication method (400) and a communication apparatus (800) are provided, and relate to the communication field, to help reduce an amount of assistance data received by a terminal device, reduce complexity and power consumption of the terminal device, and reduce signaling overheads. The communication method (400) includes: A network device determines first assistance data, where the first assistance data indicates information about at least one satellite corresponding to a first region, and the first region belongs to a cell of the network device (S401); the network device sends the first assistance data, and correspondingly, a first terminal device receives the first assistance data (S402); and the first terminal device receives a signal from one or more of the at least one satellite based on the first assistance data (S403).

## Description

This application claims priority to Chinese Patent Application No. 202311693028.3, filed with the China National Intellectual Property Administration on December 8, 2023 and entitled "COMMUNICATION METHOD AND COMMUNICATION APPARATUS", which is incorporated herein by reference in its entirety.

### TECHNICAL FIELD

This application relates to the communication field, and in particular, to a communication method and a communication apparatus.

### BACKGROUND

A global navigation satellite system (global navigation satellite system, GNSS) is a space-based radio navigation and positioning system that can provide users with all-weather three-dimensional coordinates as well as speed and time information at any place on the surface of the earth or in near-earth space. A GNSS satellite has wide coverage, and based on the GNSS, a terminal device can implement satellite communication globally. When establishing communication with the GNSS satellite or in a communication process, the terminal device usually needs to obtain some assistance data related to a target GNSS satellite, to implement precise positioning or data communication. However, the GNSS satellite is usually far away from the user, and it usually takes a long time for the GNSS satellite to deliver the assistance data to the terminal device by using a navigation message. This severely affects user experience.

In the conventional technology, the terminal device obtains related assistance data from a network device. Because a distance between the network device and the terminal device is shorter than a distance between the GNSS satellite and the terminal device, a delay of obtaining the data by the terminal device is reduced to some extent. However, the assistance data delivered by the network device usually needs to meet requirements of a large quantity of terminal devices in a serving cell of the network device, especially in a satellite communication scenario (for example, a part of or all network device functions are located on a satellite). An excessive amount of the assistance data results in high complexity and power consumption of the terminal device, and also causes large signaling load.

It can be learned that currently, a method for reducing signaling overheads of the terminal device is urgently needed.

### SUMMARY

This application provides a communication method and a communication apparatus, to help reduce an amount of assistance data received by a terminal device, and reduce signaling overheads of the terminal device.

According to a first aspect, this application provides a communication method, applied to a first terminal device or an apparatus in the first terminal device. The apparatus in the first terminal device may be a component (for example, a chip or a chip system) in the terminal device, or a component for implementing a part of functions of the terminal device. This is not limited. The method includes: receiving first assistance data, where the first assistance data indicates information about at least one satellite corresponding to a first region, and the first region belongs to a cell of a network device; and receiving a signal from one or more of the at least one satellite based on the first assistance data.

**In** a possible implementation, a serving cell of the network device may include a plurality of regions, the first region is a part of the plurality of regions, and the first assistance data sent by the network device to the first region is the information about the at least one satellite that covers or serves the first region. Optionally, there is a second region different from the first region in the plurality of regions, and assistance data sent by the network device to the second region is information about at least one satellite that covers or serves the second region. In other words, assistance data received by a terminal device located in the first region and assistance data received by a terminal device located in the second region may be different.

Optionally, the "plurality of regions" may be regions corresponding to one or more beams, or regions corresponding to one or more beam positions, or may be an administrative region or a customized geographical region, or another region. Definitions of the plurality of regions in the serving cell of the network device are not specifically limited in this application.

It should be further understood that the at least one satellite described herein is a satellite that can provide services such as communication, navigation, remote sensing, and meteorology for a user. The satellite may be a GNSS satellite, or may be a satellite with another function. For example, based on different orbit altitudes, the at least one satellite may be a low earth orbit satellite, a middle earth orbit satellite, a high earth orbit satellite, or the like. This is not limited in this application.

Compared with the conventional technology in which a network device sends assistance data (which may include satellite information applicable to most terminal devices in an entire serving cell) to a plurality of regions, in the method provided in this embodiment of this application, a size of the assistance data is reduced. This reduces complexity and power consumption (for example, complexity and power consumption of searching for a GNSS satellite and receiving the assistance data) of the terminal device, and also reduces signaling overheads.

With reference to the first aspect, in some implementations of the first aspect, the first assistance data includes an orbit parameter of the at least one satellite corresponding to the first region and/or a clock parameter of the at least one satellite corresponding to the first region.

In this embodiment of this application, the first assistance data is only the orbit parameter and/or the clock parameter of the at least one satellite corresponding to the first region. In this way, an amount of data received by the first terminal device located in the first region can be further reduced, the complexity and the power consumption of the terminal device can be further reduced, and the signaling overheads can be reduced.

In a possible scenario, the first terminal device is in a cold start scenario, for example, an initial access (initial access) scenario of the first terminal device. In this scenario, the first terminal device side does not store satellite information, or is disconnected from a network for a period of time, and the first terminal device clears all historical information, and needs to re-attempt to perform positioning and lock a satellite. In a possible implementation, the first terminal device needs to lock a corresponding satellite signal based on received assistance data. In the conventional technology, the assistance data received by the first terminal device is cell-level assistance data. On one hand, a large amount of data may need to be delivered by the network device in several segments, which leads to an excessively high delay. On the other hand, the assistance data has excessive content. As a result, it takes a long time for the first terminal device to lock a "suitable" (for example, a satellite that can implement a positioning function) satellite, which results in high search complexity and high power consumption and a long time in a search process of the first terminal device. Based on the method provided in this application, an amount of data received by the first terminal device in this scenario can be reduced, power consumption and a delay of the first terminal device in a cold start process can be reduced, cold start efficiency can be improved, and user experience can be improved.

It should be noted that, that the terminal device "locks" the satellite may be understood as a process in which the terminal device determines, based on the obtained assistance data, a target satellite to be accessed or determines at least one satellite participating in a positioning or communication service. However, this is not limited in this application.

With reference to the first aspect, in some implementations of the first aspect, the first assistance data includes an identifier of the first region.

In a possible implementation, in addition to the orbit parameter of the at least one satellite corresponding to the first region and/or the clock parameter of the at least one satellite corresponding to the first region, the first assistance data may further include the identifier of the first region.

It should be understood that satellites that cover the plurality of regions in the serving cell of the network device may be different. Therefore, assistance data corresponding to different regions may also be different. An identifier of a region is carried in assistance data, so that when an identifier of a region included in assistance data received by the first terminal device at a current moment is different from an identifier of a region included in assistance data received at a previous moment, the assistance data is updated to the latest received assistance data, to receive or search for a satellite signal based on the new assistance data, for example, determine a satellite signal corresponding to a signal with optimal receiving performance. This helps improve user experience.

In another possible implementation, the first assistance data may include only the identifier of the first region.

For example, the first terminal device has stored assistance data (the assistance data may include assistance data associated with all or a part of the regions of the network device). The network device may indicate the identifier of the first region based on the first assistance data, to indicate the first terminal device to receive or search for a satellite signal based on the first assistance data corresponding to the identifier of the first region.

Optionally, the assistance data stored by the first terminal device may be pre-stored by the terminal before delivery, or may be received from a network side after the first terminal device is powered on for the first time. This is not specifically limited in this application.

With reference to the first aspect, in some implementations of the first aspect, the method further includes: receiving second assistance data, where the second assistance data indicates information about at least one satellite corresponding to the cell of the network device, and a sending periodicity of the first assistance data is different from a sending periodicity of the second assistance data.

It should be understood that the assistance data like the first assistance data and the second assistance data in this embodiment of this application may be used to assist the first terminal device in implementing functions such as positioning and data communication. The following uses an example in which the first assistance data and the second assistance data are used for positioning for description. The first terminal device may receive, based on the first assistance data, the signal of the one or more of the at least one satellite corresponding to the first region, to implement positioning. Optionally, the first terminal device may further receive the second assistance data from the network device, and implement positioning at a finer granularity based on the second assistance data. The first assistance data may include only the orbit parameter and the clock parameter of the satellite, and the second assistance data may include existing positioning assistance data.

A GNSS satellite is used as an example, and existing positioning assistance data may include the following satellite information: GNSS reference time (GNSS reference time), a GNSS reference location (GNSS reference location), a GNSS ionospheric model (GNSS ionospheric model), GNSS earth orientation parameters (GNSS earth orientation parameters), GNSS RTK reference station information (GNSS-RTK reference station info), GNSS-RTK common observation information (GNSS-RTK common observation info), GNSS-RTK auxiliary station data (GNSS-RTK auxiliary station data), GNSS space state correction points (GNSS-SSR correction points), GNSS integrity service parameters (GNSS integrity service parameters), a GNSS integrity service alert (GNSS integrity service alert), a time model list (GNSS time model list), GNSS differential correction information (GNSS differential corrections), a GNSS navigation model (GNSS navigation model), GNSS real time integrity information (GNSS real time integrity), GNSS data bit assistance information (GNSS data bit assistance), GNSS acquisition assistance (GNSS acquisition assistance), a GNSS almanac (GNSS almanac), a GNSS-UTC model (GNSS-UTC model), GNSS auxiliary information (GNSS auxiliary information), BeiDou system differential corrections (BDS differential corrections), a BDS grid model parameter (BDS grid model parameter), GNSS reference station observations (GNSS RTK observations), GLO-RTK bias information (GLO-RTK bias information), GNSS-RTK-MAC correction differences (GNSS-RTK-MAC correction differences), GNSS-RTK residuals (GNSS-RTK residuals), GNSS-RTK-area correction parameter gradients (GNSS-RTK-FKP gradients), GNSS-SSR orbit corrections (GNSS-SSR orbit corrections), GNSS-SSR clock corrections (GNSS-SSR clock corrections), a GNSS-SSR code bias (GNSS-SSR code bias), GNSS-SSR user range accuracy (GNSS-SSR-URA), a GNSS-SSR phase bias (GNSS-SSR phase bias), GNSS-SSR slant total electron content correction (GNSS-SSR-STEC correction), GNSS-SSR gridded correction (GNSS-SSR gridded correction), NavIC differential corrections (NavIC differential corrections), NavIC gridded correction (NavIC grid model parameter), tropospheric error information, and the like.

GLO represents a Russian satellite navigation system, which is a type of a GNSS and may also be abbreviated as GLONASS. A full name of the GLO in Russian is Global'naya Navigatsionnaya Sputnikovaya Sistema, and a full name of the GLO in English is Global Navigation Satellite System. NavIC represents an Indian navigation satellite system, which is also a type of the GNSS. A full name of the NavIC in English is Navigation with Indian Constellation.

For example, the sending periodicity of the first assistance data may be shorter than the sending periodicity of the second assistance data. In this way, the first terminal device does not need to frequently update the second assistance data, so that receiving power consumption and storage space of the first terminal device can be effectively reduced.

With reference to the first aspect, in some implementations of the first aspect, the first terminal device or the apparatus in the first terminal device is in a non-connected state.

In this embodiment of this application, the first terminal device or the apparatus in the first terminal device may receive the first assistance data and/or the second assistance data in an RRC non-connected state (for example, the initial access scenario mentioned above) without entering an RRC connected state. This helps reduce the complexity and the power consumption of the first terminal device, reduce the delay, and improve user experience.

With reference to the first aspect, in some implementations of the first aspect, the method further includes: sending first information, where the first information is one or more of the following: identification information of a first serving satellite of the first terminal device; angle information between the first serving satellite and the first terminal device; beam information between the first serving satellite and the first terminal device; or location information of the first terminal device.

In this embodiment of this application, the first terminal device reports the first information to indicate an orientation of the first terminal device, to provide reference information for the network device or a core network device. This helps the network device or the core network device determine or update the first assistance data, and helps improve accuracy of the first assistance data received by the terminal device located in the first region.

With reference to the first aspect, in some implementations of the first aspect, the first region is associated with one or more beams of the network device.

With reference to the first aspect, in some implementations of the first aspect, the first assistance data is sent through broadcast.

In this embodiment of this application, the first assistance data is sent through broadcast, so that the first terminal device can receive the first assistance data in time regardless of whether the first terminal device is in the RRC connected state or non-connected state. This helps improve efficiency of accessing a satellite by the terminal device. In addition, broadcasting can also reduce signaling overheads of the network device.

With reference to the first aspect, in some implementations of the first aspect, the first assistance data is positioning assistance data.

According to the method provided in this embodiment of this application, a positioning delay of a first terminal device can be reduced, positioning performance can be improved, and user experience can be improved.

According to a second aspect, this application further provides a communication method, applied to a network device or an apparatus in the network device. The apparatus in the network device may be a component (for example, a chip or a chip system) in the network device, or a component (for example, a central unit (central unit, CU), a distributed unit (distributed unit, DU), or a radio unit (radio unit, RU)) for implementing a part of functions of the network device. This is not limited. The method includes: determining first assistance data, where the first assistance data indicates information about at least one satellite corresponding to a first region, and the first region belongs to a cell of a network device; and sending the first assistance data.

In a possible implementation, the network device obtains the first assistance data from a core network device or another interface. For example, the core network device determines the first assistance data based on stored or obtained satellite running parameter information and/or based on second information from a second terminal device. Optionally, the first assistance data is transparent or invisible to the network device, or the network device cannot decode specific content of the second information.

Optionally, the core network device may be an LMF network element. However, this is not limited in this application.

With reference to the second aspect, in some implementations of the second aspect, the first assistance data includes an orbit parameter of the at least one satellite corresponding to the first region and/or a clock parameter of the at least one satellite corresponding to the first region.

With reference to the second aspect, in some implementations of the second aspect, the first assistance data includes an identifier of the first region.

With reference to the second aspect, in some implementations of the second aspect, the method further includes: sending second assistance data, where the second assistance data indicates information about at least one satellite corresponding to the cell of the network device, and a sending periodicity of the first assistance data is different from a sending periodicity of the second assistance data.

With reference to the second aspect, in some implementations of the second aspect, a first terminal device or an apparatus in the first terminal device is in a non-connected state.

With reference to the second aspect, in some implementations of the second aspect, the method further includes: receiving second information, and determining the first assistance data includes: determining the first assistance data based on the second information, where the second information is one or more of the following: identification information of a second serving satellite of a second terminal device; angle information between the second serving satellite and the second terminal device; beam information between the second serving satellite and the second terminal device; or location information of the second terminal device.

Optionally, the network device may obtain the first assistance data from the LMF network element, or may determine the first assistance data based on the second information. This is not limited in this application.

In this embodiment of this application, the network device determines the first assistance data based on the information reported by the terminal device, so that signaling overheads between the network device and the core network device can be reduced, and power consumption of the network device and the core network device can be reduced.

With reference to the second aspect, in some implementations of the second aspect, the second terminal device belongs to the first region.

In a possible implementation, the second terminal device is in an RRC connected state, or has established a connection to the network device. The network device may learn of a region in which the second terminal device is located, and determine the first assistance data based on the information reported by the second terminal device located in the first region. Because the first assistance data is associated with the first region, determining the first assistance data based on the information reported by the second terminal device helps improve accuracy of the first assistance data, and helps reduce complexity of the first terminal device.

With reference to the second aspect, in some implementations of the second aspect, the first region is associated with one or more beams of the network device.

With reference to the second aspect, in some implementations of the second aspect, the first assistance data is sent through broadcast.

With reference to the second aspect, in some implementations of the second aspect, the first assistance data is positioning assistance data.

According to a third aspect, this application further provides a communication method, applied to a terminal device or an apparatus in the terminal device. The apparatus in the terminal device may be a component (for example, a chip or a chip system) in the terminal device, or a component for implementing a part of functions of the terminal device. This is not limited. The method includes: receiving third assistance data, where the third assistance data indicates information about at least one satellite, and the information about the at least one satellite is determined by a network device based on a signal of the at least one satellite and/or information reported by a terminal device; and receiving a signal from one or more of the at least one satellite based on the third assistance data.

For example, the "signal of the at least one satellite" may be a signal that is of a GNSS satellite and that can be received by the network device in real time. The signal may be a carrier signal, a pseudo random noise code, a ranging code, a data code, or the like. The network device may determine, by decoding the received signal, the satellite corresponding to the signal. The process may also be understood as a process in which the network device searches for a visible satellite in real time. Optionally, the network device may search local storage for information corresponding to the satellite, or may obtain the information about the satellite through interaction with the satellite. This is not limited in this application.

It should be understood that the "terminal device" herein is usually any terminal device that can report information to the network device, and there may be one or more terminal devices. This is not limited in this application.

It should be further understood that the information reported by the terminal device may indicate a satellite that has been accessed or was accessed by the terminal device, that the terminal device is in connection to the satellite (for example, has accessed the satellite network or is served by the satellite), or that the terminal device established a connection to the satellite. In this way, the network device determines the third assistance data based on the information reported by the terminal device. This helps improve accuracy of the assistance data received by the terminal device, and helps improve efficiency of accessing a target serving satellite by the terminal device.

In this embodiment of this application, the network device delivers, as the third assistance data, the information about the satellite corresponding to the satellite signal that can be received by the network device. This means that the network device performs some satellite search work for the terminal device. Compared with the conventional technology (for example, a manner in which the network device obtains related information of the third assistance data from LMF), the method provided in this application helps reduce a proportion of satellites invisible to the terminal device in the assistance data delivered by the network device, reduce an amount of the assistance data received by the terminal device, and improve the efficiency of locking the target serving satellite by the terminal device.

With reference to the third aspect, in some implementations of the third aspect, the information reported by the terminal device is one or more of the following: identification information of a serving satellite of the terminal device; angle information between the serving satellite and the terminal device; beam information between the serving satellite and the terminal device; or location information of the terminal device.

With reference to the third aspect, in some implementations of the third aspect, the information about the at least one satellite is determined by the network device based on the signal of the at least one satellite and a third region and/or orientation information reported by the terminal device and the third region, where the third region belongs to a cell of the network device.

In this embodiment of this application, a serving cell of the network device may include a plurality of regions, and the third region is a part of the plurality of regions. Assistance data delivered by the network device to the third region is determined based on a signal of at least one satellite that covers or serves the third region and/or information reported by a terminal device located in the third region. In this way, an amount of the assistance data received by the terminal device in the third region can be further reduced, and signaling overheads and power consumption of the terminal device can be reduced.

In a possible implementation, the third assistance data may include all ephemeris information about at least one satellite associated with the third region, including an orbit parameter, a clock parameter, GNSS reference time, a GNSS reference location, a GNSS ionospheric model, GNSS earth orientation parameters, GNSS-RTK reference station information, GNSS-RTK common observation information, GNSS-RTK auxiliary station data, GNSS space state correction points, GNSS integrity service parameters, a GNSS integrity service alert, a time model list, GNSS differential correction information, a GNSS navigation model, GNSS real time integrity information, GNSS data bit assistance information, GNSS acquisition assistance, a GNSS almanac, a GNSS-UTC model, GNSS auxiliary information, BeiDou system differential corrections, a BDS grid model parameter, GNSS reference station observations, GLO-RTK bias information, GNSS-RTK-MAC correction differences, GNSS-RTK residuals, GNSS-RTK-area correction parameter gradients, GNSS-SSR orbit corrections, GNSS-SSR clock corrections, a GNSS-SSR code bias, GNSS-SSR user range accuracy, a GNSS-SSR phase bias, GNSS-SSR slant total electron content correction, GNSS-SSR gridded correction, NavIC differential corrections, NavIC gridded correction, tropospheric error information, and the like of each of the at least one satellite.

In another possible implementation, the third assistance data includes only an orbit parameter of at least one satellite corresponding to the third region and/or a clock parameter of the at least one satellite corresponding to the third region.

According to a fourth aspect, this application further provides a communication method, applied to a network device or an apparatus in the network device. The apparatus in the network device may be a component (for example, a chip or a chip system) in the network device, or a component (for example, a central unit (central unit, CU), a distributed unit (distributed unit, DU), or a radio unit (radio unit, RU)) for implementing a part of functions of the network device. This is not limited. The method includes: determining third assistance data, where the third assistance data indicates information about at least one satellite, and the information about the at least one satellite is determined by a network device based on a signal of the at least one satellite and/or information reported by a terminal device; and sending the third assistance data.

With reference to the fourth aspect, in some implementations of the fourth aspect, the method further includes: receiving the signal of the at least one satellite.

With reference to the fourth aspect, in some implementations of the fourth aspect, the information reported by the terminal device is one or more of the following: identification information of a serving satellite of the terminal device; angle information between the serving satellite and the terminal device; beam information between the serving satellite and the terminal device; or location information of the terminal device.

According to a fifth aspect, this application provides a communication apparatus, including a module configured to perform the method according to any possible implementation of the first aspect, the second aspect, the third aspect, or the fourth aspect.

According to a sixth aspect, another communication apparatus is provided, including a processor. The processor may be configured to execute instructions, to implement the method according to any possible implementation of the first aspect, the second aspect, the third aspect, or the fourth aspect. Optionally, the apparatus further includes a memory, and the processor is coupled to the memory. Optionally, the apparatus further includes a communication interface, and the processor is coupled to the communication interface.

According to a seventh aspect, a processor is provided, including an input circuit, an output circuit, and a processing circuit. The processing circuit is configured to: receive a signal through the input circuit, and transmit a signal through the output circuit, so that the processor is enabled to perform the method according to any possible implementation of the first aspect, the second aspect, the third aspect, or the fourth aspect.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to an eighth aspect, a processing apparatus is provided, including a processor and a memory. The processor is configured to: read instructions stored in the memory, receive a signal via a receiver, and transmit a signal via a transmitter, to perform the method according to any possible implementation of the first aspect, the second aspect, the third aspect, or the fourth aspect.

Optionally, there are one or more processors, and there are one or more memories.

Optionally, the memory and the processor may be integrated together, or the memory and the processor may be separately disposed.

In a specific implementation process, the memory may be a non-transitory (non-transitory) memory, for example, a read-only memory (read-only memory, ROM). The memory and the processor may be integrated into one chip, or may be separately disposed on different chips. A type of the memory and a manner in which the memory and the processor are disposed are not limited in this embodiment of this application.

It should be understood that, a related data exchange process like sending of indication information may be a process of outputting the indication information from the processor, and receiving of capability information may be a process of receiving input capability information by the processor. Specifically, data output by the processor may be output to the transmitter, and input data received by the processor may be from the receiver. The transmitter and the receiver may be collectively referred to as a transceiver.

The processing apparatus in the eighth aspect may be a chip. The processor may be implemented by hardware or software. When the processor is implemented by hardware, the processor may be a logic circuit, an integrated circuit, or the like. When the processor is implemented by software, the processor may be a general-purpose processor, and may be implemented by reading software code stored in the memory. The memory may be integrated into the processor, or may be located outside the processor and exist independently.

According to a ninth aspect, a computer program product is provided. The computer program product includes a computer program (which may alternatively be referred to as code or instructions). When the computer program is run, a computer is enabled to perform the method according to any possible implementation of the first aspect, the second aspect, the third aspect, or the fourth aspect.

According to a tenth aspect, a computer-readable storage medium is provided. The computer-readable storage medium stores a computer program (which may alternatively be referred to as code or instructions). When the computer program is run on a computer, the computer is enabled to perform the method according to any possible implementation of the first aspect, the second aspect, the third aspect, or the fourth aspect.

According to an eleventh aspect, a communication system is provided, including a first communication apparatus and/or a second communication apparatus. The first communication apparatus is configured to perform the method according to any possible implementation of the first aspect, and the second communication apparatus is configured to perform the method according to any possible implementation of the third aspect. Alternatively, the first communication apparatus is configured to perform the method according to any possible implementation of the second aspect, and the second communication apparatus is configured to perform the method according to any possible implementation of the fourth aspect.

For beneficial effect and possible implementations of the fifth aspect to the eleventh aspect, refer to the descriptions of the first aspect to the fourth aspect. Details are not described again.

### BRIEF DESCRIPTION OF DRAWINGS

FIG. 1 is a diagram of a communication architecture according to an embodiment of this application;
FIG. 2 is a diagram of another communication architecture according to an embodiment of this application;
FIG. 3 is a diagram of still another communication architecture according to an embodiment of this application;
FIG. 4 is a schematic flowchart of a communication method according to an embodiment of this application;
FIG. 5 is a diagram of an association relationship between a region and a beam according to an embodiment of this application;
FIG. 6 is a schematic flowchart of another communication method according to an embodiment of this application;
FIG. 7 is a diagram of a field of view of a terminal device and a field of view of a low earth orbit satellite according to an embodiment of this application;
FIG. 8 is a block diagram of a communication apparatus according to an embodiment of this application; and
FIG. 9 is a block diagram of another communication apparatus according to an embodiment of this application.

### DESCRIPTION OF EMBODIMENTS

The following describes technical solutions of this application with reference to accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5th generation (5th generation, 5G) system or a new radio (new radio, NR) system, a satellite communication (non-terrestrial network, NTN) system, a future-oriented evolved system (for example, a 6G mobile communication system) or another evolved communication system, an open access network (open RAN, O-RAN or ORAN), a cloud radio access network (cloud radio access network, CRAN), a virtualized radio access network (virtualized RAN, VRAN), or a communication system integrating two or more of the foregoing systems.

A terminal device in embodiments of this application may also be referred to as user equipment (UE), a mobile station (mobile station, MS), a mobile terminal (mobile terminal, MT), an access terminal, a subscriber unit, a subscriber station, a mobile station, a remote station, a remote terminal, a mobile device, a user terminal, a terminal, a wireless communication device, a user agent, a user apparatus, or the like.

The terminal device may be a device that provides voice/data connectivity for a user, for example, a handheld device or a vehicle-mounted device that has a wireless connection function. Currently, examples of some terminals are as follows: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a compute device or another processing device connected to a wireless modem, a vehicle-mounted device, a wearable device, a terminal device in a 5G network, a terminal device in a future evolved public land mobile network (public land mobile network, PLMN), and the like. This is not limited in embodiments of this application.

As an example instead of a limitation, in embodiments of this application, the terminal device may alternatively be a wearable device. The wearable device may also be referred to as a wearable intelligent device, and is a general term of wearable devices, such as glasses, gloves, a watch, clothes, and shoes, that are developed by applying a wearable technology to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include a full-featured and large-size device that can implement complete and partial functions without depending on a smartphone, for example, a smart watch or smart glasses, and a device that focuses on only one type of application function and needs to work with another device like a smartphone, for example, various smart bands or smart jewelry for physical sign monitoring.

In addition, in embodiments of this application, the terminal device may alternatively be a terminal device in an internet of things (internet of things, IoT) system. An IoT is an important part of future development of information technologies, and a main technical feature of the IoT is to connect things to a network by using a communication technology, to implement an intelligent network for man-machine interconnection and thing-thing interconnection. The terminal device in this application may alternatively be a vehicle-mounted unit, a vehicle-mounted assembly, a vehicle-mounted component, a vehicle-mounted chip, or a vehicle-mounted unit that is built in a vehicle as one or more components or units. The vehicle may implement the method in this application by using the vehicle-mounted unit, the vehicle-mounted assembly, the vehicle-mounted component, the vehicle-mounted chip, or the vehicle-mounted unit that is built in the vehicle. Therefore, embodiments of this application may be applied to an internet of vehicles, for example, vehicle-to-everything (vehicle-to-everything, V2X), long term evolution-vehicle (long term evolution-vehicle, LTE-V), and vehicle-to-vehicle (vehicle-to-vehicle, V2V).

In addition, a network device in embodiments of this application may be an access network device in a radio access network (radio access network, RAN), may also be referred to as a radio access network device, and may be a transmission reception point (transmission reception point, TRP), or may be an evolved NodeB (evolved NodeB, eNB or eNodeB) in an LTE system, or may be a home base station (for example, a home evolved NodeB, or a home NodeB, HNB) or a baseband unit (baseband unit, BBU), or may be a radio controller in a cloud radio access network (cloud radio access network, CRAN) scenario. Alternatively, the access network device may be a relay station, an access point, a vehicle-mounted device, a wearable device, an access network device in a 5G network, an access network device in a future evolved PLMN network, or the like, or may be an access point (access point, AP) in a WLAN, or may be a gNB in a new radio (new radio, NR) system, or may be a satellite base station in a satellite communication system, or the like. This is not limited in embodiments of this application.

The access network device in embodiments of this application may alternatively be a module or a unit that completes a part of functions of a base station, for example, may be a central unit (central unit, CU), may be a distributed unit (distributed unit, DU), or may be a radio unit (radio unit, RU). The CU herein completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete a function of a part of or all physical layers. For specific descriptions of the protocol layers, refer to related technical specifications of the 3rd generation partnership project (3rd generation partnership project, 3GPP). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). In different systems, the CU, the DU, or the RU may alternatively have different names, but a person skilled in the art may understand meanings thereof. For example, in an ORAN system, the CU may also be referred to as an O-CU (open CU), the DU may also be referred to as an O-DU, and the RU may also be referred to as an O-RU. Any one of the CU (or a CU-CP and a CU-UP), the DU, and the RU in this application may be implemented by a software module, a hardware module, or a combination of a software module and a hardware module.

In embodiments of this application, a core network device is a device in a core network (core network, CN) that provides service support for the terminal device. Currently, the core network device may be an access and mobility management function (access and mobility management function, AMF) entity, a session management function (session management function, SMF) entity, a user plane function (user plane function, UPF) entity, and the like, which are not listed one by one herein. The AMF entity may be responsible for access management and mobility management of the terminal device. The SMF entity may be responsible for session management, for example, session establishment of a user. The UPF entity may be a functional entity on a user plane, and is mainly responsible for a connection to an external network. It should be noted that, the entity in this application may also be referred to as a network element or a functional entity. For example, the AMF entity may also be referred to as an AMF network element or an AMF functional entity. For another example, the SMF entity may also be referred to as an SMF network element or an SMF functional entity. This is not limited in this application.

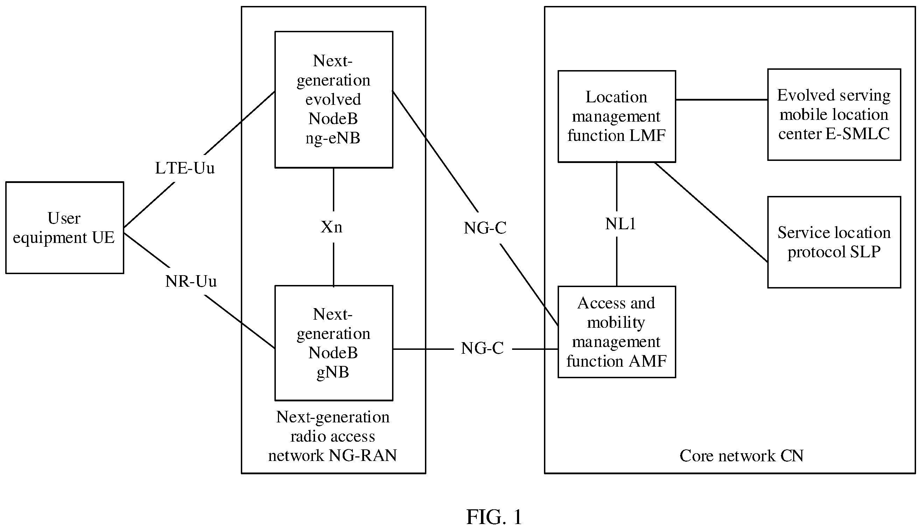

The communication system may provide extensive horizontal and vertical services in different environments (for example, rural areas, cities, and indoors). For example, the communication system may provide different positioning services based on requirements of a user, an operator, and a third party. For example, FIG. 1 is a diagram of a system architecture 100 for providing a positioning service for a user in a mobile communication system.

As shown in FIG. 1, UE is connected to a next-generation radio access network (next-generation radio access network, NG-RAN) device through an LTE-Uu interface via a next-generation evolved NodeB (next-generation evolved NodeB, ng-eNB), or through an NR-Uu interface via a next-generation NodeB (next-generation NodeB, gNB). The NG-RAN is connected to a core network via an access and mobility management function (access and mobility management function, AMF) network element through an NG-C interface. The core network CN includes the AMF network element and a location management function (location management function, LMF) network element. The AMF network element is connected to the LMF network element through an NL1 interface. It should be understood that the NG-RAN may include one or more ng-eNBs (one ng-eNB is used as an example in FIG. 1) and/or one or more gNBs (one gNB is used as an example in FIG. 1). The ng-eNB is an LTE base station that accesses the 5G core network, and the gNB is a 5G base station that accesses the 5G core network.

The AMF network element is configured to implement functions such as access management. The AMF network element may receive, from a 5G core network (5G core network, 5GC) mobile location service (location service, LCS) entity, a location service request related to the UE, or initiate a location service request on behalf of specific UE, forward the location service request to the LMF, and forward location information returned by the UE to the 5GC LCS entity. The LMF network element is responsible for supporting different types of location services related to the UE, including positioning of the UE and transmission of assistance data to the UE. A control plane and a user plane of the LMF network element are respectively an evolved serving mobile location center (evolved serving mobile location center, E-SMLC) and a service location protocol (service location protocol, SLP).

According to the system architecture shown in FIG. 1, the LMF network element may interact with the ng-eNB/gNB by using a signaling protocol, namely, an NR positioning protocol annex (NR positioning protocol annex, NRPPa) message between the LMF and a base station, to obtain a positioning reference signal (positioning reference signal, PRS), sounding reference signal (sounding reference signal, SRS) configuration information, cell timing, cell location information, and the like, or may transfer capability information, assistance data, and measurement information to the UE by using a signaling protocol, namely, an LTE positioning protocol (LTE positioning protocol, LPP) message between the LMF and the UE, and the UE is positioned through interaction between the LMF, the ng-eNB/gNB, and the UE by using positioning technologies such as an uplink/downlink time difference of arrival (uplink/downlink time difference of arrival, UL/DL-TDOA), a downlink angle of departure (downlink angle of departure, DL-AOD), an uplink angle of arrival (uplink angle of arrival, UL-AOA), multiple round trip time (multiple round trip time, Multi-RTT), and carrier phase positioning (carrier phase positioning, CPP).

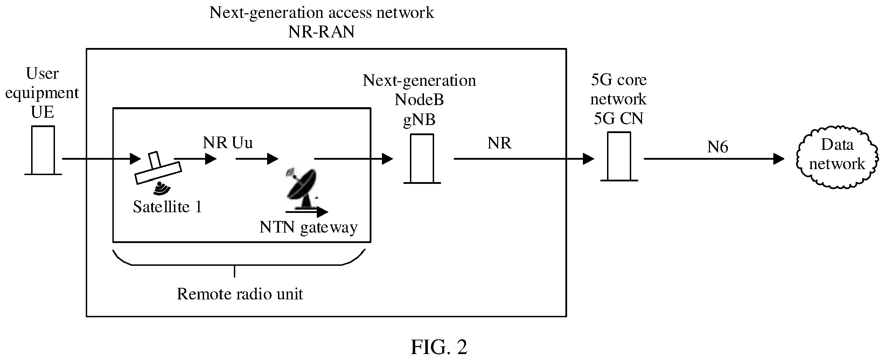

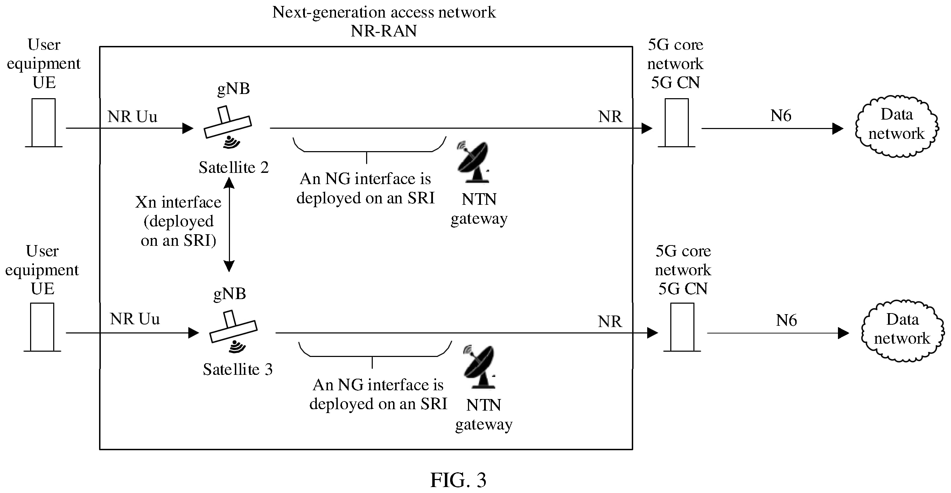

With development of satellite communication technologies, a satellite and the ng-eNB/gNB may jointly or independently provide a communication service for a user. For example, there may be two satellite network architectures shown in FIG. 2 and FIG. 3.

FIG. 2 is a diagram of a system architecture 200 according to an embodiment of this application. As shown in FIG. 2, in a process of communication between UE and a base station (gNB), a satellite is connected to and communicates with a non-terrestrial network (non-terrestrial network, NTN) gateway through an NR Uu interface, the gNB is connected to and communicates with a 5G core network (5th generation core network, 5G CN) through a next generation (next generation, NG) interface, and the 5G CN is connected to and communicates with a data network through an N6 interface. A network communication segment between the UE and the gNB (which may alternatively be an ng-eNB, not shown in the figure) is referred to as a remote radio unit (remote radio unit, RRU), and an NG-RAN node is configured to ensure normal communication between the UE and the 5G CN. A satellite 1 may be used as an L1 relay (relay), and is configured to perform radio frequency filtering, frequency conversion, and amplification, to regenerate a physical layer signal, so that the physical layer signal is invisible at a protocol layer above a physical layer. The architecture may be referred to as a "transparent transmission architecture". In the transparent transmission architecture, the satellite is equivalent to an analog radio frequency repeater (RF repeater), and only performs analog domain radio frequency filtering, frequency conversion, amplification, and forwarding on a signal from the UE or the gNB without changing a signal waveform.

FIG. 3 is a diagram of another system architecture 300 according to an embodiment of this application. As shown in FIG. 3, a satellite 2 and a satellite 3 may be used as base stations. For example, the satellite 2 is connected to and communicates with UE through an NR Uu interface, and is connected to and communicates with the another satellite 3 used as the base station through an Xn interface, where the Xn interface may be deployed on an inter-satellite link (inter-satellite link, ISL). In addition, the satellite 2 and the satellite 3 are connected to and communicate with an 5G CN through an NG interface, and the 5G CN is connected to and communicates with a data network through an N6 interface. In a process in which the satellite and the satellite 3 are connected to and communicate with the 5G CN, an NTN gateway is configured to connect network segments using different protocols to ensure normal communication. In a satellite-NTN gateway network segment, the NG interface is an NG interface deployed on a satellite radio interface (satellite radio interface, SRI). An NG-RAN node is configured to ensure normal communication between the UE and the 5G CN. The architecture may be referred to as a "regenerative architecture". In the regenerative architecture, the satellite has all or a part of functions of the base station, and may be considered as a base station. The satellite directly processes a signal from the UE, or directly sends a signal to the UE. Specifically, the satellite in the regenerative architecture supports radio frequency filtering, frequency conversion, amplification, demodulation/decoding, and encoding/modulation, and performs error detection, correction, and restoration on a signal, to improve signal quality.

It should be understood that satellites may be classified into the following three types based on different altitudes of running orbits: (1) A low earth orbit (low earth orbit, LEO) satellite, briefly referred to as a "low earth orbit satellite", has an orbit altitude of approximately 300 km to 1,500 km, and most earth observation satellites, geodesic satellites, space stations, and some new communication satellite systems use the low earth orbit satellite. (2) A middle earth orbit (middle earth orbit, MEO) satellite, briefly referred to as a "middle earth orbit satellite", has an orbit altitude of 7,000 km to 25,000 km, and is usually used for television forwarding, navigation, and the like. (3) A geosynchronous earth orbit (geosynchronous earth orbit, GEO) satellite, briefly referred to as a "high earth orbit satellite", has an orbit altitude of about 35,786 km, and is usually used for remote sensing, a satellite telephone, and the like. Characterized by a low delay, low costs, and flexible networking, the LEO is a focus of satellite communication construction. The satellites shown in FIG. 2 and FIG. 3 may be LEOs. However, this is not limited in this application.

Optionally, the NG-RAN in FIG. 1 may alternatively be replaced with the NG-RAN in FIG. 2 or FIG. 3, to use the satellite as a relay between the UE and the ng-eNB/gNB or consider the satellite as a base station, to provide a service for the terminal device. However, this is not limited in this application.

As satellite communication technologies become increasingly mature, advantages such as high coverage and high signal quality of satellite signals are gradually studied and utilized. A global navigation satellite system (global navigation satellite system, GNSS) is a space-based radio navigation and positioning system that can provide users with all-weather three-dimensional coordinates as well as speed and time information at any place on the surface of the earth or in near-earth space, including the BeiDou navigation satellite system (BDS) of China, the global positioning system (GPS) of the United States, the Glonass satellite navigation system (GLONASS) of Russia, and the Galileo satellite navigation system (GALILEO) of the European Union. A GNSS satellite has wide coverage, and based on the GNSS, the terminal device can implement satellite communication globally. In some possible implementations, the GNSS satellite is the MEO or the GEO. In a process in which the terminal device establishes communication with the GNSS satellite or performs communication by using the satellite, the terminal device needs to obtain assistance data related to the satellite, to determine a target satellite that can be used for positioning or communication.

In some implementations, the GNSS satellite sends the assistance data to the UE by using a navigation message. A GPS satellite is used as an example. The satellite sends a navigation message at a rate of 50 bits per second. One frame of navigation message includes 1500 bits, and is broadcast in 30 seconds, and a complete navigation message includes 25 frames (or may be referred to as 25 pages), which means it takes about a few minutes or a dozen minutes to broadcast the complete navigation message. In this period, the terminal device of the user cannot implement positioning and cannot access a communication network, which severely affects user experience.

Therefore, in some other implementations, the assistance data of the GNSS satellite is sent to the terminal device via a network device like the ng-eNB/gNB or a core network device like the core network LMF network element. For example, the LMF network element receives the navigation message of the GNSS satellite, the LMF network element determines specific content of assistance data, and then sends the specific content to the ng-eNB/gNB. Then, the ng-eNB/gNB sends the specific content to the terminal device, and the specific content may be broadcast by using a positioning system information block (positioning system information block, posSIB). Because a distance between the ng-eNB/gNB and the terminal device is shorter than a distance between the GNSS satellite and the terminal device, a delay of obtaining the data by the terminal device is reduced to some extent. However, in an existing design, the assistance data broadcast by the network device usually needs to meet requirements of all terminal devices in a serving cell of the network device, especially in the application scenario shown in FIG. 3 in which when a satellite is used as the network device, a radius of an NTN cell corresponding to the satellite may reach hundreds of kilometers, and an assistance data set sent by the network device is huge. On one hand, in the huge assistance data set, the terminal device may receive assistance data corresponding to a satellite that is not within a visible range of the terminal device, which increases complexity and power consumption of subsequent work of the terminal device. On the other hand, the huge amount of data also brings large signaling load to the terminal.

In view of this, this application provides a communication method and a communication apparatus. A network device sends, in a first region, information about at least one satellite corresponding to the first region, where the first region is a part of a region in a serving cell of the network device. This can reduce an amount of assistance data received by a terminal device located in the first region, reduce complexity and power consumption of the terminal device, and reduce signaling overheads of the terminal device.

Further, the amount of the assistance data received by the terminal device is reduced, and a quantity of satellites that need to be detected by the terminal device when the terminal device receives a signal from a satellite based on the assistance data is reduced. This helps improve satellite search efficiency of the terminal device, and also reduces, to some extent, a delay of implementing positioning, communication, or another measurement task by the terminal device based on the satellite.

Optionally, the complexity of the terminal device may be complexity of a process in which the terminal device searches for, calculates, and determines a target satellite based on the assistance data, or complexity of a series of other operations performed by the terminal device based on the assistance data. This is not limited in this application.

In a possible implementation, the network device in the descriptions of embodiments of this application may be any one or more of a 4G or 5G base station like an ng-eNB or a gNB, a future evolved 6G base station, a satellite having a part of or all functions of a base station, or the like. A source of the assistance data required by the terminal device is a satellite that provides satellite positioning or another service for a user, for example, may be a GNSS satellite. However, this is not specifically limited in this application.

To make objectives and technical solutions of this application clearer and more intuitive, the following describes, in detail with reference to accompanying drawings and embodiments, the communication method and the communication apparatus provided in embodiments of this application. It should be understood that specific embodiments described herein are merely used to explain this application but are not intended to limit this application.

The following first explains technical terms in this application.

### 1. Radio resource control (radio resource control, RRC) state

The RRC states of user equipment (user equipment, UE) (or referred to as a terminal device) include a connected state (RRC_CONNECTED), an idle state (RRC_IDLE), and an inactive state (RRC_INACTIVE, or referred to as a third state).

When the UE is in the RRC_CONNECTED state, links have been established between the UE and a network device and between the UE and a core network. When data arrives at the network, the data may be directly transmitted to the UE.

When the UE is in the RRC_IDLE state, there is no link between the UE and the network device and between the UE and the network. When data needs to be transmitted, links between the UE and the network device and between the UE and the core network need to be established.

When the UE is in the RRC_INACTIVE state, it indicates that the UE previously established links to the network device and the core network, but the link from the UE to the network device is released. However, the network device stores context of the UE, and when data needs to be transmitted, the network device may quickly resume the link. The inactive state is between the connected state and the idle state. In the inactive state, there is no RRC connection between the terminal and an access network device, but the access network device and the core network device maintain a connection, and the terminal stores all or a part of information required for establishing/resuming a connection. Therefore, in the inactive state, when the terminal needs to establish a connection, the terminal may quickly establish/resume the RRC connection to the access network device based on the stored related information.

In the descriptions of this application, the idle state (RRC_IDLE) and the inactive state (RRC_INACTIVE) are collectively referred to as an RRC non-connected state. In the method provided in embodiments of this application, an RRC state of the terminal device is not specifically limited.

### 2. Satellite positioning method

Existing satellite positioning methods mainly include the following two types:
A first type is a single-satellite-based positioning method. To be specific, one satellite is used as a positioning reference station for positioning. Specifically, methods such as multiple round trip time (multiple round trip time, Multi-RTT), a time difference of arrival (time difference of arrival, TDOA) at a plurality of moments of a single satellite, Doppler, and carrier phase positioning may be used. An advantage of this type of positioning method is that a satellite density requirement is low (theoretically, a single satellite is enough). However, because positioning depends on a single satellite, the positioning method faces problems of low precision and a high delay.

A second type is a multi-satellite-based positioning method. To be specific, a plurality of satellites (at least four satellites) are used as positioning reference stations for positioning. Specific methods include, for example, Multi-RTT, TDOA (a single moment of a plurality of satellites), and carrier phase positioning. Because a quantity of positioning reference stations is large, positioning precision of this type of positioning method is high. However, a plurality of satellites (at least four satellites) are required in a visible range of a terminal device. This type of method has a high satellite density requirement, and also imposes a requirement on inter-satellite interaction and coordination.

In a possible implementation, first assistance data and/or second assistance data in embodiments of this application may be positioning assistance data. A satellite positioning method used by the terminal device is not specifically limited in embodiments of this application. However, it should be understood that, regardless of single-satellite-based positioning or multi-satellite-based positioning, the method provided in embodiments of this application helps reduce a delay of implementing a positioning function by the terminal device, and helps improve user experience.

Before the method and the apparatus provided in embodiments of this application are described, the following descriptions are first provided.

First, in embodiments shown below, terms and English abbreviations, for example, reference data or differential data, are examples provided for ease of description, and shall not constitute any limitation on this application. This application does not exclude a possibility of defining another term that can implement a same or similar function in an existing or future protocol.

Second, "first", "second", and various numeric numbers in the following embodiments are merely distinguished for ease of description, and are not intended to limit the scope of embodiments of this application.

Third, "at least one" means one or more, and "a plurality of" means two or more. A term "and/or" describes an association relationship between associated objects, and indicates that three relationships may exist. For example, A and/or B may indicate the following three cases: A exists alone, both A and B exist, and B exists alone, where A and B may be singular or plural. A character "/" usually indicates an "or" relationship between the associated objects. At least one of the following items (pieces) or a similar expression thereof indicates any combination of the items, including a single item (piece) or any combination of a plurality of items (pieces). For example, at least one of a, b, and c may represent "a", or "b", or "c", or "a and b", or "a and c", or "b and c", or "a, b, and c", where a, b, and c may be single, or may be plural.

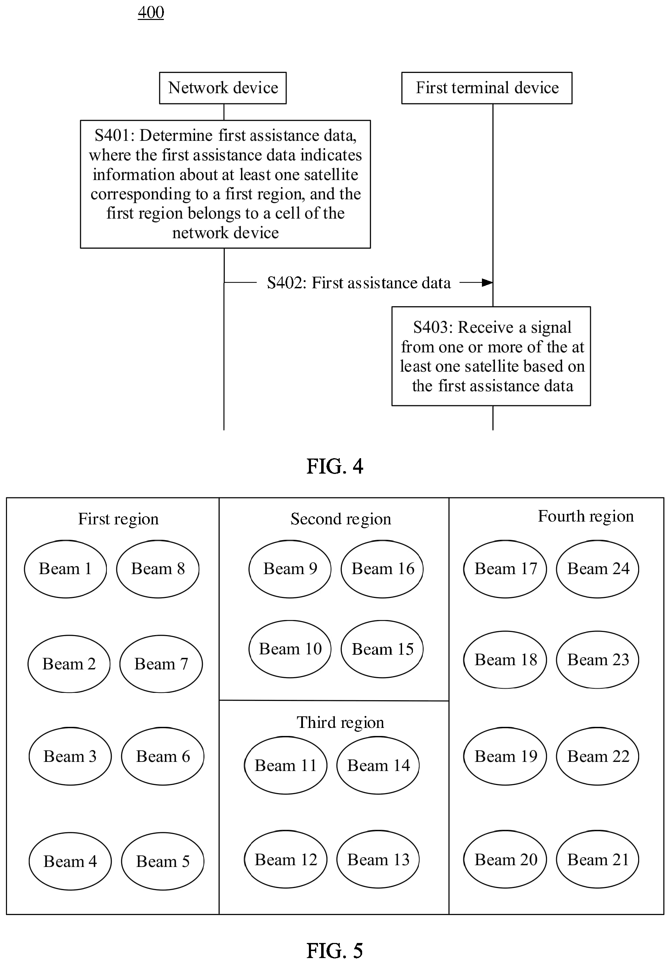

The following describes, in detail with reference to FIG. 4 to FIG. 7, the communication method provided in embodiments of this application.

FIG. 4 is a schematic flowchart of a communication method 400 according to an embodiment of this application. The method 400 is described in detail from a perspective of interaction between a network device and a terminal device. The method 400 may be applied to any one of the system architectures shown in FIG. 1, FIG. 2, and FIG. 3. The method includes:
S401: The network device determines first assistance data, where the first assistance data indicates information about at least one satellite corresponding to a first region, and the first region belongs to a cell of the network device.
S402: The network device sends the first assistance data. Correspondingly, a first terminal device receives the first assistance data.
S403: The first terminal device receives a signal from one or more of the at least one satellite based on the first assistance data.

Optionally, the first assistance data may be data used to assist in positioning, or may be assistance data used for power control, beam management, or another communication purpose. This is not limited in this application.

In a possible implementation, a serving cell of the network device may include a plurality of regions, the first region is a part of the plurality of regions, and the first assistance data sent by the network device to the first region is the information about the at least one satellite that covers or serves the first region. Optionally, there is a second region different from the first region in the plurality of regions, assistance data sent by the network device to the second region is information about at least one satellite that covers or serves the second region, and assistance data received by a terminal device located in the first region and assistance data received by a terminal device located in the second region are not completely the same.

Optionally, the "plurality of regions" may be regions corresponding to one or more beams, or regions corresponding to one or more beam positions, or may be an administrative region or a customized geographical region, or any other region. Definitions of the plurality of regions in the serving cell of the network device are not specifically limited in this application.

It should be further understood that the satellite may be a GNSS satellite, or may be a satellite with another function (including but not limited to a communication satellite, a navigation satellite, a remote sensing satellite, a meteorological satellite, and the like). Based on different orbit altitudes, the satellite may be a low earth orbit satellite, a middle earth orbit satellite, a high earth orbit satellite, or the like. This is not limited in this application. Based on the information about the at least one satellite indicated by the first assistance data, the first terminal device may receive the signal from the one or more of the at least one satellite, or send a signal to the one or more of the at least one satellite.

Optionally, the signal may be a reference signal or a data signal. The reference signal may be a reference signal used for positioning, for example, a sounding reference signal SRS used for uplink positioning, a positioning reference signal PRS used for downlink positioning, or a sidelink positioning reference signal (sidelink positioning reference signal, SL-PRS). The reference signal may alternatively be another reference signal not used for positioning, for example, a synchronization signal block (synchronization signal block, SSB). This is not specifically limited in this application.

Compared with the conventional technology in which assistance data sent by a network device to a plurality of regions is information about a satellite that covers an entire serving cell of the network device, in the method provided in this embodiment of this application, an amount of data received by the terminal device is reduced. This helps reduce complexity and power consumption of satellite search or calculation work subsequently performed by the terminal device, and helps reduce respective signaling overheads of the terminal device and the network device.

In an optional embodiment, the network device may send the assistance data in the following two possible manners.

Manner 1: The network device delivers the assistance data by region.

It should be understood that delivering the assistance data by region herein may mean that the network device delivers the assistance data at a granularity of a region. For example, when the region is a "beam" (which may be understood as that different beams respectively correspond to different regions), assistance data delivered by the network device by using different beams may be different. If the "partial region" is the first region, the network device sends the first assistance data to the first region. Optionally, the first assistance data is applicable only to a user in the first region. If the "partial region" includes the first region and the second region, the first assistance data is sent to the first region, and the information about the at least one satellite that covers the second region is sent to the second region. The rest may be deduced by analogy. Details are not described. Optionally, the first assistance data is applicable only to the user in the first region, and is not applicable to a user in the second region.

Manner 2: That the network device delivers the assistance data based on the serving cell of the network device may mean that the network device delivers the assistance data at a granularity of a cell. The assistance data may include assistance data of one or more regions, and each piece of assistance data in the assistance data of the one or more regions is associated with the one or more regions in the serving cell of the network device.

It should be understood that, that the network device delivers the assistance data based on the serving cell of the network device may mean that the network device delivers the assistance data once to cover the entire cell, and the delivered assistance data is associated with the plurality of regions in the network device. In the conventional technology, the assistance data sent by the network device to all the regions in the serving cell is the same. A difference between Manner 2 and the conventional technology lies in that the assistance data sent by the network device to the plurality of regions in the serving cell of the network device may be different, that is, the assistance data sent by the network device to the plurality of regions is related only to satellites that cover the respective regions, and data received by terminal devices in different regions may be different. Optionally, the first assistance data associated with the first region is applicable only to the user in the first region, and is not applicable to a user in another region (different from the first region).

In a possible implementation, the first region is associated with one or more beams of the network device. That the first region may be associated with the one or more beams of the network device may be understood as that the first assistance data may be sent by using the one or more beams associated with the first region. For example, as shown in FIG. 5, a cell served by the network device covers 32 GNSS satellites, and the network device sends data by using 24 beams (beams). A first region is associated with beams whose identifiers are 1 to 8, and corresponds to information about satellites whose satellite identifiers are 1 to 5; a second region is associated with beams whose identifiers are 9, 10, 15, and 16, and corresponds to information about satellites whose identifiers are 5 to 9; a third region is associated with beams whose identifiers are 11, 12, 13, and 14, and corresponds to information about satellites whose identifiers are 10 to 20; and a fourth region is associated with beams whose identifiers are 17 to 24, and corresponds to information about satellites whose identifiers are 21 to 32.

Refer to FIG. 5. A possible implementation of Manner 1 may be as follows: The network device delivers the first assistance data by using a narrow beam (for example, one or more of the beams whose identifiers are 1 to 8), or delivers the first assistance data by using a wide beam (for example, a beam obtained by combining a plurality of beams in the beams whose identifiers are 1 to 8), where the first assistance data is applicable to a user in the first region. The network device delivers fourth assistance data (the fourth assistance data is information about at least one satellite that covers or serves the second region) to the second region by using a narrow beam (for example, one or more of the beams whose identifiers are 9, 10, 15, and 16), or delivers the fourth assistance data by using a wide beam (for example, a beam obtained by combining a plurality of beams in the beams whose identifiers are 9, 10, 15, and 16), where the fourth assistance data is applicable to a user in the second region. Optionally, the assistance data cannot be used across regions. For example, the first assistance data is not applicable to the user in the second region, and the fourth assistance data is not applicable to the user in the first region. In a possible implementation, after region update occurs on the first terminal device, the first terminal device releases originally stored assistance data, and receives and stores assistance data in a new region. For example, the first terminal device is located in the first region at a first moment, and receives and stores the assistance data associated with the first region. At a second moment after the first moment, region update occurs on the first terminal device, that is, the first terminal device is located in the second region, and the first terminal device releases the first assistance data, and receives and stores the fourth assistance data. In this way, storage overheads on the terminal side can be reduced.

A possible implementation of Manner 2 may be as follows: The network device delivers fifth assistance data by using a narrow beam (for example, identified as one or more beams in the 24 beams), or delivers the fifth assistance data by using a wide beam, where the fifth assistance data includes assistance data associated with the first region, the second region, the third region, and the fourth region. Optionally, the assistance data cannot be used across regions. For example, the first assistance data is not applicable to a user in another region (the second region, the third region, or the fourth region). Specific implementations of Manner 1 and Manner 2 are not limited in this application.

Optionally, the network device may send the first assistance data by using a broadcast message or a unicast message. For example, the first assistance data is broadcast by using a positioning system information block (positioning system information block, posSIB) or another SIB, or the first assistance data is sent to the first terminal device by using a unicast message like an RRC message or a MAC CE message when the first terminal device is already in an RRC connected state.

In an optional embodiment, the first assistance data may further include an identifier of the first region.

In a possible implementation, satellites that cover different regions are not completely the same, that is, assistance data corresponding to different regions is not completely the same. Therefore, an identifier of a region is carried in assistance data, so that when an identifier of a region included in assistance data received by the first terminal device at a current moment is different from an identifier of a region included in assistance data received at a previous moment, the assistance data is updated to the latest received assistance data, to lock a serving satellite based on the new assistance data. In this way, on one hand, the terminal may search for the satellite based on the latest (most accurate) assistance data, thereby reducing search and calculation complexity. On the other hand, the terminal may store small assistance data (for example, always store the latest assistance data), thereby reducing storage overheads.

In a possible scenario, the first terminal device performs a cold start process, and the first terminal device or an apparatus in the first terminal device is in a radio resource control (radio resource control, RRC) non-connected state.

Optionally, the cold start in this application may mean that the first terminal device enables a GNSS function for the first time or restarts the GNSS function after a period of time. For example, the cold start of the GNSS function may occur when the first terminal device uses information such as an unstored satellite ephemeris for the first time, or when the GNSS ephemeris fails because the first terminal device is located indoors or in a blocked environment for a period of time (for example, more than 2 hours), or when the GNSS ephemeris information is lost due to battery exhaustion of the first terminal device. This is not limited in this application.

In this scenario, the first terminal device side does not store the satellite information (for example, in an initial access scenario), or the first terminal device is disconnected from a network for a period of time, clears all historical information, and needs to re-attempt to perform positioning and lock a satellite. In a possible implementation, the first terminal device needs to search for or lock a corresponding satellite signal based on the received assistance data (for example, in a polling manner). In the conventional technology, the assistance data received by the first terminal device is cell-level assistance data. On one hand, a large amount of data may need to be delivered by the network device in several segments, which leads to an excessively high delay. On the other hand, the received assistance data has excessive content. As a result, it takes a long time for the first terminal device to lock a "suitable" (for example, a satellite that can assist in a positioning function of the terminal device) satellite, which results in high complexity and power consumption of the first terminal device, and the entire cold start process is time-consuming and has low efficiency.

It should be noted that, that the terminal device "locks" the satellite may be understood as a process in which the terminal device determines, based on the obtained assistance data, a target satellite to be accessed or determines at least one satellite participating in a positioning or communication service. However, this is not limited in this application.

According to the method provided in this embodiment of this application, the first assistance data received by the first terminal device located in the first region includes only the information about the at least one satellite that covers the first region. On one hand, this reduces the amount of the assistance data received by the first terminal device, and reduces time for receiving the assistance data by the first terminal device. On the other hand, a quantity of satellites included in the first assistance data received by the first terminal device may be less than a quantity of satellites included in the assistance data delivered based on the entire cell in the conventional technology. Therefore, the first terminal device needs to subsequently poll fewer satellites, and efficiency of locking the target satellite is higher, and cold start time of the first terminal device can be further reduced.

In an optional embodiment, the first assistance data may include only the identifier of the first region.

In a possible implementation, the first terminal device has stored assistance data, and the assistance data may include assistance data respectively corresponding to all or a part of regions of the network device. The network device may indicate the identifier of the first region based on the first assistance data, to indicate the first terminal device to receive a signal of a satellite based on the first assistance data corresponding to the identifier of the first region.

Optionally, the assistance data stored by the first terminal device may be pre-stored by the terminal before delivery, or may be received from a network side or a satellite after the first terminal device is powered on for the first time. This is not specifically limited in this application.

In a possible implementation, the first assistance data may include all ephemeris information about at least one satellite corresponding to the first region, including an orbit parameter, a clock parameter, GNSS reference time, a GNSS reference location, a GNSS ionospheric model, GNSS earth orientation parameters, GNSS-RTK reference station information, GNSS-RTK common observation information, GNSS-RTK auxiliary station data, GNSS space state correction points, GNSS integrity service parameters, a GNSS integrity service alert, a time model list, GNSS differential correction information, a GNSS navigation model, GNSS real time integrity information, GNSS data bit assistance information, GNSS acquisition assistance, a GNSS almanac, a GNSS-UTC model, GNSS auxiliary information, BeiDou system differential corrections, a BDS grid model parameter, GNSS reference station observations, GLO-RTK bias information, GNSS-RTK-MAC correction differences, GNSS-RTK residuals, GNSS-RTK-area correction parameter gradients, GNSS-SSR orbit corrections, GNSS-SSR clock corrections, a GNSS-SSR code bias, GNSS-SSR user range accuracy, a GNSS-SSR phase bias, GNSS-SSR slant total electron content correction, GNSS-SSR gridded correction, NavIC differential corrections, NavIC gridded correction, tropospheric error information, and the like of each of the at least one satellite.

In another possible implementation, the first assistance data includes only an orbit parameter of the at least one satellite corresponding to the first region and/or a clock parameter of the at least one satellite corresponding to the first region.

In a possible implementation, after receiving basic ephemeris information such as the orbit parameter and/or the clock parameter of the at least one satellite that covers the first region, the first terminal device located in the first region may receive a signal of a corresponding satellite, to implement basic positioning of the first terminal device, thereby determining a serving satellite corresponding to the location of the first terminal device, and accessing the serving satellite. Optionally, the orbit parameter and the clock parameter may be respectively IE NavModel-BDS-KeplerianSet2 and BDS-ClockModel2. This is not specifically limited in this application.

In this embodiment of this application, the first assistance data may include only some assistance data that supports a basic positioning function, for example, the orbit parameter and/or the clock parameter of the at least one satellite corresponding to the first region. In this way, the amount of data received by the first terminal device located in the first region can be further reduced, and the signaling overheads and the power consumption of the terminal device can be further reduced. Particularly, when the first terminal device is in the cold start scenario of the GNSS function, the delay of the cold start of the GNSS function can be further reduced, the efficiency of the cold start of the GNSS function can be improved, and user experience can be improved.

In an optional embodiment, the first assistance data and/or second assistance data are/is assistance data related to a positioning function.

In a possible implementation, after receiving, based on the first assistance data, a signal of the one or more of the at least one satellite corresponding to the first region to implement positioning, establish communication with the target serving satellite, and enter the RRC connected state, the first terminal device may further receive the second assistance data from the network device, where the second assistance data indicates information about at least one satellite corresponding to the cell of the network device, and the first terminal device may implement positioning at a finer granularity based on the second assistance data. In this way, when the first terminal device does not establish a connection to the satellite, efficiency of accessing the serving satellite by the first terminal device is improved based on the first assistance data with a smaller amount and a lower sending delay. After the first terminal device establishes the connection to the satellite, a precise positioning requirement of the first terminal device can be met based on the second assistance data. This helps improve user experience.

In a possible implementation, the first assistance data and/or the second assistance data may be sent by using a broadcast message, and a sending periodicity of the first assistance data is different from a sending periodicity of the second assistance data. For example, the sending periodicity of the first assistance data may be shorter than the sending periodicity of the second assistance data. In this way, the first terminal device does not need to frequently update the second assistance data, so that receiving power consumption and storage space of the first terminal device can be effectively reduced.

According to the method provided in this embodiment of this application, in some scenarios, if not having a high requirement on positioning performance (for example, in a scenario in which satellite communication is initially established, and in this scenario, a serving satellite can be locked and communication can be established only by performing coarse positioning to determine a range in which the terminal device is located), the first terminal device may only receive or update the first assistance data, to implement coarse positioning, and does not need to receive or update the second assistance data. This can reduce the complexity and the power consumption of the first terminal device, and improve a speed of implementing the positioning function by the first terminal device. In some other scenarios, if having a high requirement on the positioning performance (for example, in a scenario in which the user performs navigation by using map software), the first terminal device may receive or update the first assistance data and the second assistance data, to further improve the positioning performance and positioning precision, and improve user experience.

Optionally, the first assistance data may be broadcast by using a newly defined positioning system information block (positioning system information block, posSIB), and the second assistance data may be broadcast by using existing posSiB type1-x (for example, one of typel-1 to type1-10) and/or posSiB type2-x (for example, one of type2-1 to type2-25). However, this is not specifically limited in this application.

Optionally, when the first terminal device is already in the RRC connected state, the network device may alternatively send the assistance data to the first terminal device by using a unicast message. For example, the unicast message may be an RRC message or a MAC CE message. This is not specifically limited in this application.

There may be the following two possible implementations in which the network device determines the first assistance data described in S401 in the method 400.

In a first possible implementation, the network device obtains the first assistance data from a core network device or another interface.

In a possible implementation, the core network device may determine the first assistance data based on a stored or received satellite running parameter, and/or determine the first assistance data based on second information from a second terminal device, and then transparently transmit the first assistance data to the first terminal device via the network device. Optionally, the first assistance data is transparent or invisible to the network device, or the network device cannot decode specific content of the second information.

Optionally, the second information may be directly sent by the second terminal device to the core network device, or may be sent by the second terminal device to the network device and then sent by the network device to the core network device. This is not limited in this application.

Optionally, the second information may include one or more of the following: identification information of a second serving satellite of the second terminal device; angle information between the second serving satellite and the second terminal device, for example, elevation angle information and AOD information; beam information between the second serving satellite and the second terminal device, for example, a PRS resource identifier, a PRS resource set (resource set) identifier, an SSB index (index), or a channel state information (channel state information reference signal, CSI-RS) identifier that may identify a beam direction; location information of the second terminal device; or an identifier of a region in which the second terminal device is located. For example, the second terminal device may report the second information together with a coarse location by using IE MeasResults. This is not limited in this application.

Optionally, the core network device may be an LMF network element. The terminal device may interact with the LMF network element by using an LPP message, and the network device may interact with the LMF network element by using an NRPPa message. This is not limited in this application.

In a possible implementation, the LPP message may be an LPP request assistance data (LPP request assistance data) message or an LPP provide assistance data (LPP provide assistance data) message. The NRPPa message may be a transmission-reception node request (transmission-reception point information request, TRP information request) message, a transmission-reception node response (TRP information response) message, or an assistance information control (assistance information control) message. However, this is not limited in this application.

In an example, the terminal device may request positioning assistance data from the LMF network element by using the LPP request assistance data message. In response to the request of the terminal device, the LMF network element may send the positioning assistance data to the terminal device by using the LPP provide assistance data message, where the positioning assistance data may be, for example, the first assistance data and/or the second assistance data. However, this is not specifically limited in this application. For another example, the LMF network element may send the positioning assistance data to the terminal device by using the LPP provide assistance data message, that is, the LMF network element does not depend on whether the terminal device requests the positioning assistance data from the LMF network element.

In another example, the terminal device may report information to the LMF network element by using the LPP request assistance data message, where the information may be, for example, information such as first information (or the second information). However, this is not limited in this application.

In still another example, the LMF network element may send, to the network device by using the assistance information control message, assistance data (for example, the first assistance data and/or the second assistance data) and/or the information (for example, the first information and/or the second information) reported by the terminal device.

The network device may send, to the LMF network element by using the TRP information response message, the information (for example, the first information and/or the second information) reported by the terminal device. However, this is not limited in this application. Optionally, before sending the TRP information response message to the LMF network element, the network device may receive the TRP information request message from the LMF network element. However, this is not limited in this application.

In a possible implementation, the core network device may collect information reported by a plurality of terminal devices. Based on the information, the core network device may determine orientations of the terminal devices, use, as the first assistance data, information about a serving satellite of a terminal device that is in the plurality of terminal devices and that is located in the first region, and send the first assistance data to the first region via the network device. In this way, accuracy of the first assistance data determined by the core network device for the first region can be improved, and the complexity and the power consumption of locking the target serving satellite by the first terminal device can be reduced.

In a second possible implementation, the network device determines the first assistance data based on the second information reported by the second terminal device. The network device sends, by using a broadcast message or a unicast message, the first assistance data to the first terminal device located in the first region.

Optionally, a manner in which the network device determines the first assistance data based on the information reported by the terminal device may be the same as the foregoing manner in which the core network device determines the first assistance data based on the information reported by the terminal device. Details are not described herein. The network device determines the first assistance data based on the information reported by the terminal device, so that signaling overheads between the network device and the core network device can be reduced, and this helps reduce power consumption of the network device and the core network device.

Optionally, for a terminal device that has established a connection to the network device, the network device may alternatively send the first assistance data to the terminal device through unicast (for example, by using an RRC message or a MAC CE message). This is not specifically limited in this application.

In an optional embodiment, the second terminal device belongs to the first region.

In a possible implementation, the network device is in the RRC connected state, or has established a connection to the second terminal device. The network device may learn of a region in which the second terminal device is located, and determine the first assistance data based on the information reported by the second terminal device located in the first region. Because the first assistance data is associated with the first region, determining the first assistance data based on the information reported by the second terminal device helps improve accuracy of the first assistance data, and helps reduce complexity of the first terminal device.

In an optional embodiment, the method 400 further includes: The first terminal device sends first information, where the first information is one or more of the following: identification information of a first serving satellite of the first terminal device; angle information between the first serving satellite and the first terminal device; beam information between the first serving satellite and the first terminal device; or location information of the first terminal device.

In some possible implementations, the first terminal device may be in the RRC connected state when sending the first information.

Optionally, the first terminal device may report the first information by using an RRC message or a MAC CE message. This is not limited in this application.

In another possible implementation, the first terminal device may be in the RRC non-connected state when sending the first information. For example, the first terminal device may alternatively send the first information by using a message (message, msg for short) in a random access channel (random access channel, RACH). Optionally, the first terminal device may report the first information by using a msg 1 or a msg 3 in a 4-step RACH or a msg A in a 2-step RACH. This is not specifically limited in this application.

In this embodiment of this application, the first terminal device reports the first information to indicate an orientation of the first terminal device, to provide reference information for the network device or the core network device. This helps the network device or the core network device determine or update the first assistance data, and helps improve the accuracy of the first assistance data received by the terminal device located in the first region.

In a possible implementation, the network device may periodically update and broadcast the first assistance data. The first terminal device and the second terminal device may be a same terminal device, or may be different terminal devices. However, this is not limited in this application.

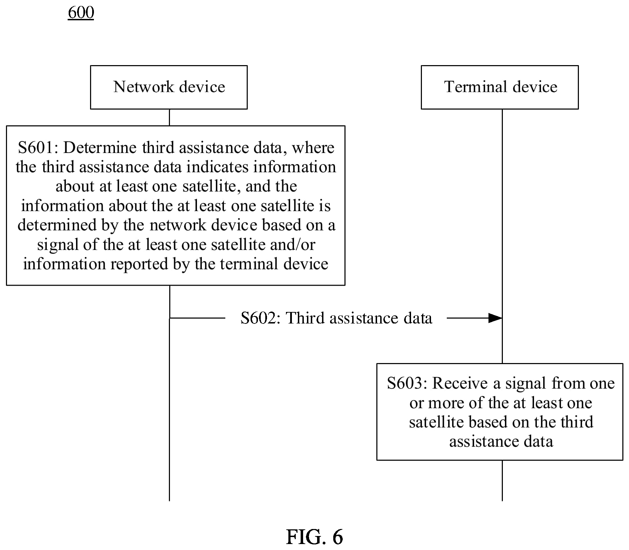

FIG. 6 is a schematic flowchart of a communication method 600 according to an embodiment of this application. The method 600 is described from a perspective of interaction between a network device and a terminal device. The method 600 may be applied to any one of the system architectures shown in FIG. 1, FIG. 2, and FIG. 3. The method includes:
S601: The network device determines third assistance data, where the third assistance data indicates information about at least one satellite, and the information about the at least one satellite is determined by the network device based on a signal of the at least one satellite and/or information reported by the terminal device.
S602: The network device sends the third assistance data. Correspondingly, the terminal device receives the third assistance data.
S603: The terminal device receives a signal from one or more of the at least one satellite based on the third assistance data.

It should be understood that the "terminal device" in S601 is usually any terminal device that can report information to the network device, and there may be one or more terminal devices. This is not limited in this application.

In a possible implementation, the "signal of the at least one satellite" in S601 may be a signal that is of a GNSS satellite and that can be received by the network device in real time. The signal may be a carrier signal, a pseudo random noise code, a ranging code, a data code, or the like. The network device may determine, by decoding the received signal, the satellite corresponding to the signal. The process may also be understood as a process in which the network device searches for a visible satellite in real time. Optionally, the network device may search local storage for information corresponding to the satellite, or may obtain the information about the satellite through interaction with the satellite. This is not limited in this application.

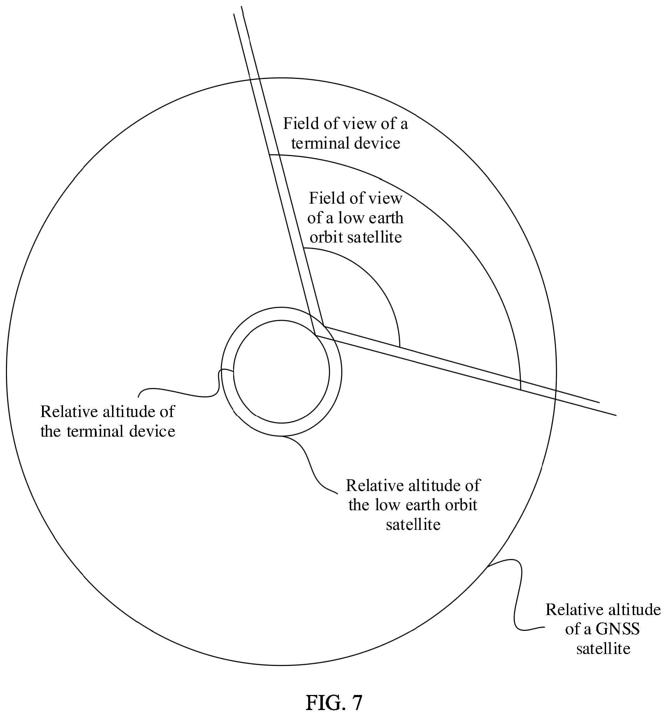

FIG. 7 shows, by using an example in which the network device is a low earth orbit satellite and the GNSS satellite is a high earth orbit satellite, fields of view of the network device and a terminal device in a serving cell of the network device relative to the GNSS satellite. As shown in FIG. 7, relative to an altitude of the GNSS satellite, it may be considered that the network device and the terminal device have a same field of view.

In this embodiment of this application, the network device delivers, as the third assistance data, the information about the satellite corresponding to the satellite signal that can be received by the network device. This means that the network device performs some visible satellite search work for the terminal device. Compared with the conventional technology in which currently available satellite information is obtained from an LMF network element, the method provided in this application helps reduce a proportion of satellites invisible to the terminal device in the assistance data delivered by the network device, reduce an amount of the assistance data received by the terminal device, and improve efficiency of locking a target serving satellite by the terminal device.

It should be further understood that the information reported by the terminal device may indicate a satellite that has been accessed or was accessed by the terminal device, that the terminal device is in a connected state (for example, has accessed the satellite network or is served by the satellite), or that the terminal device established a connection to the satellite.

Optionally, the information reported by the terminal device may include one or more of the following: identification information of a serving satellite of the terminal device; angle information between the serving satellite and the terminal device; beam information between the serving satellite and the terminal device; or location information of the terminal device.

In an embodiment, before the network device performs S601, the method 600 further includes: The network device receives the signal of the at least one satellite.

It should be noted that communication between the network device and the satellite and communication between the network device and the terminal device may be implemented based on different protocols or different signal coding manners.

In a possible implementation, the network device determines the third assistance data based on satellite information corresponding to satellite signals that can be received by the network device in real time, for example, may determine a union set of the satellite information as the third assistance data.

In another possible implementation, the network device determines the third assistance data based on information reported by the terminal device, for example, may determine a union set of the information as the third assistance data.

In still another possible implementation, the network device determines the third assistance data based on satellite information reported by the terminal device and satellite information corresponding to a satellite signal that can be received by the network device in real time, for example, may determine a union set of the satellite information as the third assistance data.

According to the method provided in this embodiment of this application, the network device may determine the third assistance information based on the signal that is of the at least one satellite and that is received in real time and/or the information reported by the terminal device, and does not need to interact with the core network device, thereby reducing signaling and power consumption of the network device. In addition, because the network device performs some of the satellite search work, the third assistance data determined according to the method provided in this application helps reduce complexity of the terminal device, and helps improve the efficiency of accessing the target serving satellite by the terminal device.

Optionally, the terminal device that reports the information to the network device in the method 600 may include the terminal device that receives the third assistance data, or may not include the terminal device that receives the third assistance data. This is not limited in this application.

In an optional embodiment, another possible implementation of S601 in the method includes: The information about the at least one satellite is determined by the network device based on the signal of the at least one satellite and a third region and/or orientation information reported by the terminal device and the third region, where the third region belongs to a cell of the network device.

In this embodiment of this application, the serving cell of the network device may include a plurality of regions, and the third region is a part of the plurality of regions. Assistance data delivered by the network device to the third region is determined based on a signal of at least one satellite that covers or serves the third region and/or information reported by a terminal device located in the third region. In this way, an amount of the assistance data received by the terminal device in the third region can be further reduced, and signaling overheads and power consumption of the terminal device can be reduced.

In a possible implementation, the third assistance data may include all ephemeris information about at least one satellite associated with the third region, including an orbit parameter, a clock parameter, GNSS reference time, a GNSS reference location, a GNSS ionospheric model, GNSS earth orientation parameters, GNSS-RTK reference station information, GNSS-RTK common observation information, GNSS-RTK auxiliary station data, GNSS space state correction points, GNSS integrity service parameters, a GNSS integrity service alert, a time model list, GNSS differential correction information, a GNSS navigation model, GNSS real time integrity information, GNSS data bit assistance information, GNSS acquisition assistance, a GNSS almanac, a GNSS-UTC model, GNSS auxiliary information, BeiDou system differential corrections, a BDS grid model parameter, GNSS reference station observations, GLO-RTK bias information, GNSS-RTK-MAC correction differences, GNSS-RTK residuals, GNSS-RTK-area correction parameter gradients, GNSS-SSR orbit corrections, GNSS-SSR clock corrections, a GNSS-SSR code bias, GNSS-SSR user range accuracy, a GNSS-SSR phase bias, GNSS-SSR slant total electron content correction, GNSS-SSR gridded correction, NavIC differential corrections, NavIC gridded correction, tropospheric error information, and the like of each of the at least one satellite.

In another possible implementation, the third assistance data includes only an orbit parameter of the at least one satellite corresponding to the third region and/or a clock parameter of the at least one satellite corresponding to the third region, to further reduce the amount of data in the third assistance data.

It should be understood that the steps in the foregoing embodiments may alternatively be coupled to each other. This is not limited in this application. In addition, sequence numbers of the foregoing processes do not mean an execution sequence. The execution sequence of the processes should be determined based on functions and internal logic of the processes, and should not constitute any limitation on implementation processes of embodiments of this application.

It should be noted that information (including but not limited to user equipment information, personal information of a user, and the like) and data (including but not limited to data used for analysis, stored data, displayed data, and the like) reported by the terminal device in this application are information and data that are authorized by the user or fully authorized by all parties. In addition, collection, use, and processing of related data need to comply with related laws, regulations, and standards of related countries and regions. A corresponding operation entry is provided for the user to choose to authorize or reject.

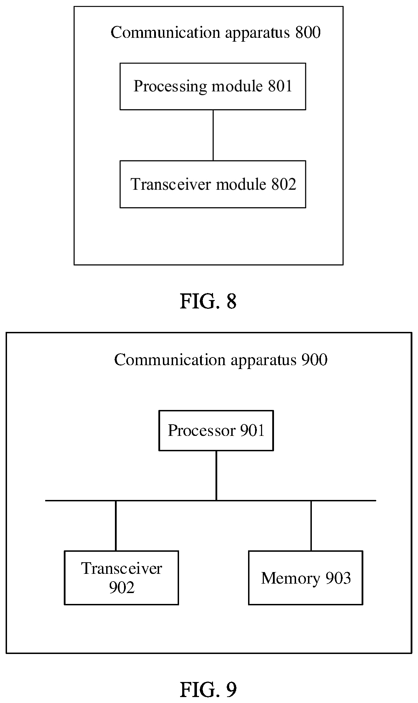

The foregoing describes in detail the communication methods in embodiments of this application with reference to FIG. 4 to FIG. 7. The following describes in detail communication apparatuses in embodiments of this application with reference to FIG. 8 and FIG. 9.

FIG. 8 shows a communication apparatus 800 according to an embodiment of this application. The communication apparatus 800 includes a processing module 801 and a transceiver module 802. The processing module 801 is configured to perform processing-related steps in the method embodiments, and the transceiver module 802 is configured to perform receiving/sending-related steps in the method embodiments.

In a first possible implementation, the communication apparatus 800 is configured to implement steps and procedures corresponding to the first terminal device in the method 400.

The transceiver module 802 is configured to: receive first assistance data, where the first assistance data indicates information about at least one satellite corresponding to a first region, and the first region belongs to a cell of a network device; and receive a signal from one or more of the at least one satellite based on the first assistance data.

Optionally, the first assistance data includes an orbit parameter of the at least one satellite corresponding to the first region and/or a clock parameter of the at least one satellite corresponding to the first region.

Optionally, the first assistance data includes an identifier of the first region.

Optionally, receiving second assistance data, where the second assistance data indicates information about at least one satellite corresponding to the cell of the network device, and a sending periodicity of the first assistance data is different from a sending periodicity of the second assistance data.

Optionally, the first terminal device or an apparatus in the first terminal device is in a non-connected state.

Optionally, the transceiver module 802 is configured to send first information, where the first information is one or more of the following: identification information of a first serving satellite of the first terminal device; angle information between the first serving satellite and the first terminal device; beam information between the first serving satellite and the first terminal device; or location information of the first terminal device.

Optionally, the first region is associated with one or more beams of the network device.

Optionally, the first assistance data is sent through broadcast.

Optionally, the first assistance data is positioning assistance data.

In a second possible implementation, the communication apparatus 800 is configured to implement steps and procedures corresponding to the network device in the method 400.

The transceiver module 802 is configured to determine first assistance data, where the first assistance data indicates information about at least one satellite corresponding to a first region, and the first region belongs to a cell of the network device; and the sending module 801 is configured to send the first assistance data.

Optionally, the first assistance data includes an orbit parameter of the at least one satellite corresponding to the first region and/or a clock parameter of the at least one satellite corresponding to the first region.

Optionally, the first assistance data includes an identifier of the first region.

Optionally, the transceiver module 802 is further configured to send second assistance data, where the second assistance data indicates information about at least one satellite corresponding to the cell of the network device, and a sending periodicity of the first assistance data is different from a sending periodicity of the second assistance data.

Optionally, a first terminal device or an apparatus in the first terminal device is in a non-connected state.

Optionally, the transceiver module 802 is further configured to receive second information, where the second information is one or more of the following: identification information of a second serving satellite of a second terminal device; angle information between the second serving satellite and the second terminal device; beam information between the second serving satellite and the second terminal device; or location information of the second terminal device.

Optionally, the second terminal device belongs to the first region.

Optionally, the first region is associated with one or more beams of the network device.

Optionally, the first assistance data is sent through broadcast.

Optionally, the first assistance data is positioning assistance data.

In a third possible implementation, the communication apparatus 800 is configured to implement steps and procedures corresponding to the terminal device in the method 600.

The transceiver module 802 is configured to: receive third assistance data, where the third assistance data indicates information about at least one satellite, and the information about the at least one satellite is determined by a network device based on a signal of the at least one satellite and/or information reported by the terminal device; and receive a signal from one or more of the at least one satellite based on the third assistance data.

Optionally, the information reported by the terminal device is one or more of the following: identification information of a serving satellite of the terminal device; angle information between the serving satellite and the terminal device; beam information between the serving satellite and the terminal device; or location information of the terminal device.

In a fourth possible implementation, the communication apparatus 800 is configured to implement steps and procedures corresponding to the network device in the method 600.

The processing module 801 is configured to determine third assistance data, where the third assistance data indicates information about at least one satellite, and the information about the at least one satellite is determined by the network device based on a signal of the at least one satellite and/or information reported by a terminal device; and the transceiver module 802 is configured to send the third assistance data.

Optionally, the transceiver module 802 is further configured to receive the signal of the at least one satellite.

Optionally, the information reported by the terminal device is one or more of the following: identification information of a serving satellite of the terminal device; angle information between the serving satellite and the terminal device; beam information between the serving satellite and the terminal device; or location information of the terminal device.

It should be understood that, the apparatus 800 herein is presented in a form of a functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 800 may be specifically the terminal device or the network device in the foregoing embodiments, or the functions described in the foregoing embodiments may be integrated into the apparatus 800, and the apparatus 800 may be configured to perform procedures and/or steps corresponding to the terminal device or the network device in the foregoing method embodiments. To avoid repetition, details are not described herein again.

The apparatus 800 has a function of implementing the corresponding steps performed by the terminal device or the network device in the foregoing methods. The foregoing function may be implemented by hardware, or may be implemented by hardware executing corresponding software. The hardware or the software includes one or more modules corresponding to the function.

In embodiments of this application, the apparatus 800 in FIG. 8 may alternatively be a chip or a chip system, for example, a system on a chip (system on a chip, SoC).

FIG. 9 is a block diagram of a communication apparatus 900 according to an embodiment of this application. The apparatus 900 includes a processor 901, and optionally, further includes a transceiver 902 and/or a memory 903. The processor 901, the transceiver 902, and the memory 903 communicate with each other through an internal connection path. The memory 903 is configured to store instructions. The processor 901 is configured to execute the instructions stored in the memory 903, to control the transceiver 902 to send a signal and/or receive a signal.

It should be understood that the apparatus 900 may be specifically the terminal device or the network device in the foregoing embodiments, and may be configured to perform steps and/or procedures corresponding to the terminal device or the network device in the foregoing method embodiments. Optionally, the memory 903 may include a read-only memory and a random access memory, and provide the instructions and data for the processor. A part of the memory may further include a non-volatile random access memory. For example, the memory may further store information of a device type. The processor 901 may be configured to execute the instructions stored in the memory. When the processor 901 executes the instructions stored in the memory, the processor 901 is configured to perform steps and/or procedures in the foregoing method embodiments. The transceiver 902 may include a transmitter and a receiver. The transmitter may be configured to implement steps and/or procedures that correspond to the transceiver and that are used to perform a sending action. The receiver may be configured to implement steps and/or procedures that correspond to the transceiver and that are used to perform a receiving action.

It should be understood that in embodiments of this application, the processor may be a central processing unit (central processing unit, CPU), or the processor may be another general-purpose processor, a digital signal processor (DSP), an application-specific integrated circuit (ASIC), a field programmable gate array (FPGA) or another programmable logic device, a discrete gate or transistor logic device, a discrete hardware component, or the like. The general-purpose processor may be a microprocessor, or the processor may be any conventional processor or the like.

In an implementation process, the steps in the foregoing methods can be implemented through a hardware integrated logic circuit in the processor or by using instructions in a form of software. The steps of the method disclosed with reference to embodiments of this application may be directly performed by a hardware processor, or may be performed by a combination of hardware in the processor and a software module. A software module may be located in a mature storage medium in the art, for example, a random access memory, a flash memory, a read-only memory, a programmable read-only memory, an electrically erasable programmable memory, or a register. The storage medium is located in the memory, and the processor reads instructions in the memory and completes the steps in the foregoing methods in combination with hardware of the processor. To avoid repetition, details are not described herein.

This application further provides a computer-readable storage medium. The computer-readable storage medium is configured to store a computer program, and the computer program is configured to implement the methods shown in the foregoing method embodiments.

This application further provides a computer program product. The computer program product includes a computer program (which may also be referred to as computer program code or instructions). When the computer program is run on a computer, the computer may perform the methods shown in the foregoing method embodiments.

A communication system includes a first communication apparatus and/or a second communication apparatus. The first communication apparatus is configured to perform the functions implemented by the terminal device in the foregoing method embodiments, and the second communication apparatus is configured to perform the functions implemented by the network device in the foregoing method embodiments.

A person of ordinary skill in the art may be aware that units and algorithm steps in the examples described with reference to embodiments disclosed in this specification can be implemented by electronic hardware, or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the system, apparatus, and unit, refer to a corresponding process in the method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate components may or may not be physically separated, and components shown as units may or may not be physical units, to be specific, may be located in one place, or may be distributed on a plurality of network units. A part or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application may be implemented in a form of software product. The computer software product is stored in a storage medium, and includes several instructions for instructing a computer device (which may be a personal computer, a server, or a network device) to perform all or a part of the steps of the methods in embodiments of this application. The storage medium includes any medium that can store program code, for example, a USB flash drive, a removable hard disk, a read-only memory (read-only memory, ROM), a random access memory (random access memory, RAM), a magnetic disk, or an optical disc.

## Claims

1. A communication method, applied to a first terminal device or an apparatus in the first terminal device, comprising:
receiving first assistance data, wherein the first assistance data indicates information about at least one satellite corresponding to a first region, and the first region belongs to a cell of a network device; and
receiving a signal from one or more of the at least one satellite based on the first assistance data.

2. The method according to claim 1, wherein the first assistance data comprises an orbit parameter of the at least one satellite corresponding to the first region and/or a clock parameter of the at least one satellite corresponding to the first region.

3. The method according to claim 1 or 2, wherein the first assistance data comprises an identifier of the first region.

4. The method according to any one of claims 1 to 3, wherein the method further comprises:
receiving second assistance data, wherein the second assistance data indicates information about at least one satellite corresponding to the cell of the network device, and a sending periodicity of the first assistance data is different from a sending periodicity of the second assistance data.

5. The method according to any one of claims 1 to 3, wherein the first terminal device or the apparatus in the first terminal device is in a non-connected state.

6. The method according to any one of claims 1 to 5, wherein the method further comprises:
sending first information, wherein the first information is one or more of the following:
identification information of a first serving satellite of the first terminal device;
angle information between the first serving satellite and the first terminal device;
beam information between the first serving satellite and the first terminal device; or
location information of the first terminal device.

7. The method according to any one of claims 1 to 6, wherein the first region is associated with one or more beams of the network device.

8. The method according to any one of claims 1 to 7, wherein the first assistance data is sent through broadcast.

9. The method according to any one of claims 1 to 8, wherein the first assistance data is positioning assistance data.

10. A communication method, comprising:
determining first assistance data, wherein the first assistance data indicates information about at least one satellite corresponding to a first region, and the first region belongs to a cell of a network device; and
sending the first assistance data.

11. The method according to claim 10, wherein the first assistance data comprises an orbit parameter of the at least one satellite corresponding to the first region and/or a clock parameter of the at least one satellite corresponding to the first region.

12. The method according to claim 10 or 11, wherein the first assistance data comprises an identifier of the first region.

13. The method according to any one of claims 10 to 12, wherein the method further comprises:
sending second assistance data, wherein the second assistance data indicates information about at least one satellite corresponding to the cell of the network device, and a sending periodicity of the first assistance data is different from a sending periodicity of the second assistance data.

14. The method according to any one of claims 10 to 13, wherein a first terminal device or an apparatus in the first terminal device is in a non-connected state.

15. The method according to any one of claims 10 to 14, wherein the method further comprises:
receiving second information, and determining the first assistance data comprises:
determining the first assistance data based on the second information, wherein
the second information is one or more of the following:
identification information of a second serving satellite of a second terminal device;
angle information between the second serving satellite and the second terminal device;
beam information between the second serving satellite and the second terminal device; or
location information of the second terminal device.

16. The method according to claim 15, wherein the second terminal device belongs to the first region.

17. The method according to any one of claims 10 to 16, wherein the first region is associated with one or more beams of the network device.

18. The method according to any one of claims 10 to 17, wherein the first assistance data is sent through broadcast.

19. The method according to any one of claims 10 to 18, wherein the first assistance data is positioning assistance data.

20. A communication method, comprising:
receiving third assistance data, wherein the third assistance data indicates information about at least one satellite, and the information about the at least one satellite is determined by a network device based on a signal of the at least one satellite and/or information reported by a terminal device; and
receiving a signal from one or more of the at least one satellite based on the third assistance data.

21. The method according to claim 20, wherein the information reported by the terminal device is one or more of the following:
identification information of a serving satellite of the terminal device;
angle information between the serving satellite and the terminal device;
beam information between the serving satellite and the terminal device; or
location information of the terminal device.

22. A communication method, comprising:
determining third assistance data, wherein the third assistance data indicates information about at least one satellite, and the information about the at least one satellite is determined by a network device based on a signal of the at least one satellite and/or information reported by a terminal device; and
sending the third assistance data.

23. The method according to claim 22, wherein the method further comprises:
receiving the signal of the at least one satellite.

24. The method according to claim 22 or 23, wherein the information reported by the terminal device is one or more of the following:
identification information of a serving satellite of the terminal device;
angle information between the serving satellite and the terminal device;
beam information between the serving satellite and the terminal device; or
location information of the terminal device.

25. A communication apparatus, comprising a processor, wherein the processor executes computer instructions, so that the processor performs the method according to any one of claims 1 to 9, or performs the method according to any one of claims 10 to 19, or performs the method according to claim 20 or 21, or performs the method according to any one of claims 22 to 24.

26. A computer-readable storage medium, configured to store a computer program, wherein the computer program comprises instructions for implementing the method according to any one of claims 1 to 9, or instructions for performing the method according to any one of claims 10 to 19, or instructions for performing the method according to claim 20 or 21, or instructions for performing the method according to any one of claims 22 to 24.

27. A computer program product, wherein the computer program product comprises computer program code, and when the computer program code is run on a computer, the computer is enabled to implement the method according to any one of claims 1 to 9, or perform the method according to any one of claims 10 to 19, or perform the method according to claim 20 or 21, or perform the method according to any one of claims 22 to 24.

28. A communication apparatus, comprising a module configured to perform the method according to any one of claims 1 to 9, or comprising a module configured to perform the method according to claim 20 or 21.

29. A communication apparatus, comprising a module configured to perform the method according to any one of claims 10 to 19, or comprising a module configured to perform the method according to any one of claims 22 to 24.

30. A communication system, comprising a first communication apparatus and/or a second communication apparatus, wherein the first communication apparatus is configured to perform the method according to any one of claims 1 to 9, and the second communication apparatus is configured to perform the method according to any one of claims 10 to 19, or the first communication apparatus is configured to perform the method according to claim 20 or 21, and the second communication apparatus is configured to perform the method according to any one of claims 22 to 24.
